# EUROPÄISCHE PATENTSCHRIFT

(11) **EP 3 841 926 B1**
(45) Veröffentlichungstag und Bekanntmachung des Hinweises auf die Patenterteilung: **31.05.2023**
(21) Anmeldenummer: 19219370.4
(22) Anmeldetag: 23.12.2019
(51) Int. Cl.: A47J 27/00, A47J 36/32

(54) **FUNKTIONSELEMENT FÜR EIN KÜCHENGERÄT, KÜCHENGERÄT SOWIE VERFAHREN ZUR DATENKOMMUNIKATION**
KITCHEN APPLIANCE, FUNCTIONAL ELEMENT FOR A KITCHEN APPLIANCE AND DATA COMMUNICATION METHOD
ÉLÉMENT FONCTIONNEL POUR UN APPAREIL DE CUISINE, APPAREIL DE CUISINE ET PROCÉDÉ DE COMMUNICATION DE DONNÉES

(43) Veröffentlichungstag der Anmeldung: 30.06.2021
(73) Patentinhaber: Vorwerk & Co. Interholding GmbH, 42270 Wuppertal (DE)
(72) Erfinder: Lang, Torsten, 42657 Solingen (DE)
(74) Vertreter: Bals & Vogel Patentanwälte PartGmbB

(56) Entgegenhaltungen:
- EP-A1- 2 983 254
- EP-A1- 2 987 438
- CN-A- 108 652 412

## Beschreibung

Die Erfindung betrifft einen Funktionselement, ein Küchengerät sowie ein Verfahren.

Aus dem Stand der Technik sind Küchengeräte bekannt, die mit verschiedenen Zubehörteilen ausgerüstet werden können, um einem Benutzer wahlweise bestimmte Funktionen zur Verfügung zu stellen. Beispielsweise ist es bekannt bei Küchenmaschinen unterschiedliche Aufsatzelemente zu verwenden, um die Küchenmaschine zwischen einem Kochen und einem Dampfgaren oder einem Rühren und einem Zerkleinern umzurüsten.

Dabei kann es von Vorteil sein, wenn eine Steuereinheit des Küchengerätes erkennen kann, ob ein bestimmtes Zubehörteil montiert ist oder nicht. So kann z.B. die Sicherheit einer Küchenmaschine verbessert sein, wenn die Steuereinheit erkennen kann, ob ein Aufsatz zum Rühren oder zum Zerkleinern montiert ist.

In Abhängigkeit von der Erkennung eines Zubehörteils kann beispielsweise eine bestimmte Funktion für den Benutzer elektronisch zugänglich gemacht werden oder dem Benutzer verwehrt werden. Dabei wäre es wünschenswert, eine Identifikation der Zubehörteile über einen Chip zur drahtlosen Kommunikation mit der Steuereinheit zu ermöglichen. Dabei ist es jedoch problematisch, wenn andere Bauteile des Küchengerätes einen direkten Kommunikationsweg der Zubehörteile mit der Steuereinheit stören oder die Zubehörteile von der Steuereinheit vollständig abschirmen.

EP2983254 offenbart den Oberbegriff des Anspruchs 1.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Kommunikation eines Zubehörteils eines Küchengerätes mit einer Steuereinheit des Küchengerätes zu ermöglichen, vorzugsweise wenn ein direkter Kommunikationsweg zwischen dem Zubehörteil und der Steuereinheit unterbrochen oder gestört ist.

Die voranstehende Aufgabe wird gelöst durch ein Funktionselement mit den Merkmalen des Anspruchs 1, ein Küchengerät mit den Merkmalen des Anspruchs 11, sowie ein Verfahren mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Funktionselement beschrieben sind, selbstverständlich auch im Zusammenhang mit dem erfindungsgemäßen Küchengerät und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Funktionselement für ein Küchengerät vorgesehen. Das Funktionselement weist einen Funktionsbereich für eine Funktion für das Küchengerät. Ferner weist das Funktionselement eine Brückeneinheit zum Überwinden eines ein Zubehörteil des Küchengerätes von einer Steuereinheit des Küchengerätes abschirmenden Schirmraumes des Küchengerätes für eine drahtlose Datenkommunikation zwischen dem Zubehörteil und der Steuereinheit auf. Die Brückeneinheit umfasst einen Zubehörabschnitt zur Kommunikation mit dem Zubehörteil, insbesondere im Schirmraum, und einen Steuerabschnitt zur Kommunikation mit der Steuereinheit.

Vorzugsweise kann es sich bei dem Küchengerät um eine Küchenmaschine zum zumindest teilweise automatisierten Zubereiten von Speisen handeln. Es ist jedoch ebenfalls denkbar, dass es sich bei dem Küchengerät um einen Ofen, einen Kühlschrank oder dergleichen handelt. Bei dem Funktionselement kann es sich z.B. um einen Deckel oder einen Griff für einen Behälter des Küchengerätes handeln. Der Funktionsbereich kann z.B. eine Abdeckfunktion, eine Abdichtfunktion, eine Grifffunktion oder eine Zubereitungsfunktion zum Zubereiten von Speisen bereitstellen. Insbesondere kann eine geometrische Form des Funktionselementes den Funktionsbereich bilden. Das Zubehörteil kann vorzugsweise eine Zusatzfunktion des Küchengerätes ermöglichen. Insbesondere kann es sich bei dem Zubehörteil um eine lösbare oder lose Komponente des Küchengerätes handeln. Beispielsweise kann das Zubehörteil ersetzbar sein, um unterschiedliche Zusatzfunktionen des Küchengerätes zu ermöglichen. Bei dem Zubehörteil kann es sich z.B. um einen Dampfgaraufsatz, einen Rührbesen, ein Messer, ein Spritzschutz eines Deckelelementes oder einen Spatel handeln. Vorzugsweise ist die Brückeneinheit zum Überwinden des Schirmraumes für eine drahtlose Datenkommunikation zwischen unterschiedlichen Zubehörteilen und der Steuereinheit ausgebildet.

Die Brückeneinheit kann zum Überwinden des Schirmraumes eine Weiterleitungsfunktion aufweisen, bei welcher Kommunikationssignale vom Zubehörteil durch den Zubehörabschnitt empfangbar sind, an den Steuerabschnitt weiterleitbar sind und vom Steuerabschnitt an die Steuereinheit sendbar sind. Vorzugsweise kann die Brückeneinheit zur passiven oder aktiven Weiterleitung der drahtlosen Datenkommunikation zwischen dem Zubehörteil und der Steuereinheit ausgebildet sein. Insbesondere können der Zubehörabschnitt und der Steuerabschnitt elektrisch verbunden sein. Unter der drahtlosen Datenkommunikation kann insbesondere verstanden werden, dass das Zubehörteil und die Steuereinheit während dem Datentransport nicht über ein Kabel verbunden sind. Vorzugsweise kann die drahtlose Datenkommunikation Funksignale umfassen.

Der Schirmraum kann durch ein metallisches oder elektrisch leitendes Bauteil gebildet sein. Dabei kann der Schirmraum, z.B. durch einen Behälter, in dem sich das Zubehörteil befindet, geometrisch abgeschlossen sein. Es ist jedoch ebenfalls denkbar, dass der Schirmraum durch eine abschirmende oder elektronisch störende Komponente lediglich einen bestimmten Bereich des Küchengerätes betrifft. Insbesondere kann der Schirmraum einen faradayschen Käfig umfassen, durch welchen Funksignale der drahtlosen Datenkommunikation blockiert oder gestört werden können. Die teilweise Abschirmung des Zubehörteils durch den Schirmraum kann insbesondere eine vollständige Blockierung oder eine Störung von Kommunikationssignalen zur Steuereinheit umfassen.

Bei der Kommunikation mit dem Zubehörteil und/oder bei der Kommunikation mit der Steuereinheit kann es sich jeweils um eine einseitige Kommunikation handeln. Beispielsweise ist es denkbar, dass vom Zubehörteil lediglich Kommunikationssignale empfangen werden und an die Steuereinheit lediglich Weiterleitungssignale gesendet werden. Vorzugsweise kann der Zubehörabschnitt zur beidseitigen Kommunikation mit dem Zubehörteil und/oder der Steuerabschnitt zur beidseitigen Kommunikation mit der Steuereinheit ausgebildet sein. Dadurch kann z.B. eine Abfrage des Zubehörteils ermöglicht sein.

Vorzugsweise ist, insbesondere in einer Betriebsposition des Funktionselementes, der Zubehörabschnitt zum Schirmraum und der Steuerabschnitt zur Steuereinheit ausrichtbar. Durch die Brückeneinheit kann somit eine Datenkommunikation vom Zubehörteil zur Steuereinheit und/oder umgekehrt durch das Funktionselement realisierbar sein, obwohl das Zubehörteil auf direktem Kommunikationsweg durch den Schirmraum zumindest teilweise abgeschirmt ist. Dadurch kann z.B. eine zuverlässige Detektion und/oder Identifikation des Zubehörteils am Küchengerät, insbesondere automatisiert, erfolgen. Beispielsweise kann dadurch eine korrekte Verwendung benötigter Zubehörteile bei der Abarbeitung eines Rezeptes durch eine Küchenmaschine verbessert werden. Weiterhin kann dadurch Bauraum für zusätzliche Kommunikationswege eingespart werden und/oder eine Konstruktionsfreiheit der übrigen Komponenten, wie z.B. einer Komponente, die den Schirmraum bildet, verbessert werden. Insbesondere kann ferner ein Doppelnutzen für das Funktionselement erreicht werden, welches vorzugsweise als Kommunikationsbrücke zwischen dem Zubehörteil und der Steuereinheit und für die Funktion des Küchengerätes eingesetzt werden kann.

Weiterhin kann bei einem erfindungsgemäßen Funktionselement vorteilhafterweise vorgesehen sein, dass der Zubehörabschnitt ein erstes Kommunikationsmittel zur drahtlosen Datenkommunikation mit dem Zubehörteil und der Steuerabschnitt ein zweites Kommunikationsmittel zur drahtlosen Datenkommunikation mit der Steuereinheit aufweist. Bei dem ersten und/oder zweiten Kommunikationsmittel kann es sich um eine standardisierte Schnittstelle für die drahtlose Datenkommunikation zwischen dem Zubehörteil und der Steuereinheit handeln. Somit können insbesondere separate Kommunikationsmittel vorgesehen sein. Dabei können sich das erste und zweite Kommunikationsmittel vorzugsweise in ihrer Ausrichtung und/oder Form unterscheiden. Beispielsweise kann es sich beim ersten und zweiten Kommunikationsmittel jeweils um eine Antenne handeln. Dadurch kann die Datenkommunikation zwischen dem Zubehörteil und der Steuereinheit über die Brückeneinheit verbessert sein.

Vorzugsweise kann bei einem erfindungsgemäßen Funktionselement vorgesehen sein, dass das erste und/oder zweite Kommunikationsmittel eine Spulenantenne aufweist, insbesondere wobei eine Wicklung der Spulenantenne des ersten Kommunikationsmittels einen größeren Wicklungsdurchmesser aufweist, als eine Wicklung der Spulenantenne des zweiten Kommunikationsmittels. Insbesondere können das erste und zweite Kommunikationsmittel jeweils eine Spulenantenne aufweisen. Dadurch kann eine energieeffiziente Möglichkeit für die drahtlose Datenkommunikation bereitgestellt sein. Weiterhin kann durch die Ausbildung als Spulenantenne eine Energieübertragung durch die Kommunikationssignale und/oder durch die Weiterleitungssignale von der Steuereinheit zum Zubehörteil und/oder zur Brückeneinheit ermöglicht sein. Durch unterschiedliche Wicklungsdurchmesser kann z.B. die Ausrichtung der Kommunikationsmittel festgelegt sein. Beispielsweise können beide Kommunikationsmittel konzentrisch am Funktionselement angeordnet sein, wobei das erste Kommunikationsmittel Kommunikationssignale aus dem Schirmraum empfangen kann und das zweite Kommunikationsmittel Weiterleitungssignale an die Steuereinheit senden kann oder Kommunikationssignale von der Steuereinheit empfangen kann.

Es ist ferner bei einem erfindungsgemäßen Funktionselement denkbar, dass das erste und/oder zweite Kommunikationsmittel eine NFC-Schnittstelle und/oder eine Bluetooth-Schnittstelle, insbesondere eine Bluetooth-Low-Energy-Schnittstelle umfasst. Die NFC-Schnittstelle kann eine NFC-Ringantenne und/oder einen NFC-Reader umfassen. Insbesondere kann das erste Kommunikationsmittel eine NFC-Schnittstelle umfassen und das zweite Kommunikationsmittel eine Bluetooth-Schnittstelle, beispielsweise in Form einer BLE-Schnittstelle. Dadurch ist es nicht notwendig, dass das Zubehörteil eine eigene aktive Elektronik umfasst. Weiterhin können Daten des Zubehörteils im Funktionselement verarbeitbar und über die Bluetooth-Schnittstelle mit einem höheren Komplexitätsgrad verarbeiteter Daten an die Steuereinheit übermittelbar sein. Eine Bluetooth-Schnittstelle der Steuereinheit kann dabei z.B. zusätzlich für eine Kommunikation mit einem mobilen Endgerät eines Benutzers einsetzbar sein. Es ist jedoch ebenfalls denkbar, dass das erste und zweite Kommunikationsmittel jeweils eine NFC-Schnittstelle aufweisen. Dadurch kann eine Weiterverarbeitung der Kommunikationssignale im Funktionselement reduziert sein oder eine Weiterleitung der Kommunikationssignale ohne eine Weiterverarbeitung ermöglicht sein.

Weiterhin kann bei einem erfindungsgemäßen Funktionselement vorteilhafterweise vorgesehen sein, dass eine mechanische Koppelschnittstelle zur Anordnung an einer mechanischen Gegenschnittstelle des Küchengerätes vorgesehen ist, insbesondere wobei die Koppelschnittstelle derart angeordnet ist, dass bei der Anordnung der Koppelschnittstelle an der Gegenschnittstelle zumindest der Steuerabschnitt außerhalb des Schirmraumes positionierbar ist. Dadurch kann ein freier Kommunikationsweg des zwischen der Brückeneinheit und der Steuereinheit sichergestellt sein, insbesondere wenn es sich bei dem Funktionselement um ein lösbares Funktionselement des Küchengerätes handelt. Beispielsweise kann die Anordnung der mechanischen Koppelschnittstelle an der mechanischen Gegenschnittstelle eine Befestigung des Funktionselementes am Küchengerät oder einer Komponente des Küchengerätes, insbesondere eines Behälters, umfassen. Vorzugsweise weist die Koppelschnittstelle eine geometrische Form auf, die zu einer geometrischen Form der Gegenschnittstelle korrespondiert. Insbesondere kann eine kraft- und/oder formschlüssige Verbindung der Koppelschnittstelle und der Gegenschnittstelle ermöglicht sein. Ferner kann die Koppelschnittstelle vorzugsweise eine Dichtung zum Abdichten der Anordnung der Koppelschnittstelle und der Gegenschnittstelle umfassen.

Weiterhin ist es bei einem erfindungsgemäßen Funktionselement denkbar, dass der Funktionsbereich für eine Abdeckfunktion eines Zubereitungsbereiches zum Zubereiten von Speisen des Küchengerätes ausgebildet ist, insbesondere wobei zumindest eine Verschlussaufnahme vorgesehen ist, durch welche das Funktionselement an der mechanischen Gegenschnittstelle fixierbar ist. Beispielsweise kann es sich bei dem Funktionselement um einen Deckel zum zumindest teilweisen oder vollständigen Abdecken eines Behälters und/oder eines Garraumes des Küchengerätes handeln. Die Verschlussaufnahme kann zur form- und/oder kraftschlüssigen Aufnahme eines Verschlusselementes des Küchengerätes ausgebildet sein, durch welches das Funktionselement in einer Position fixierbar sein kann. Dadurch kann z.B. für einen Ablauf eines Zerkleinerungsvorgangs im Zubereitungsbereich sichergestellt sein, dass ein Benutzer nicht in den Zubereitungsbereich eingreifen kann. Ferner kann durch die mechanische Koppelschnittstelle und/oder die Abdeckfunktion sichergestellt sein, dass das Funktionselement durch einen Benutzer in einer vorbestimmten Position am Küchengerät angeordnet wird, so dass das erste und/oder zweite Kommunikationsmittel der Brückeneinheit eine definierte Positionierung und/oder Orientierung erhalten. Dadurch kann die Kommunikation zwischen dem Funktionselement und dem Zubehörteil und/oder der Steuereinheit verbessert sein.

Weiterhin ist es bei einem erfindungsgemäßen Funktionselement denkbar, dass der Funktionsbereich ein Funktionsmaterial aufweist, in welches die Brückeneinheit, insbesondere vollständig, eingebettet ist. Bei dem Funktionsmaterial kann es sich z.B. um einen Kunststoff handeln. Die Brückeneinheit, insbesondere das erste und/oder zweite Kommunikationsmittel der Brückeneinheit, kann in das Funktionsmaterial eingespritzt sein und/oder die Brückeneinheit kann mit dem Funktionsmaterial umspritzt sein. Dadurch kann eine Abdichtung von elektrischen Komponenten der Brückeneinheit ermöglicht sein, insbesondere ohne eine separate Dichtung vorzusehen. Insbesondere kann das Funktionsmaterial im Betrieb des Küchengerätes eine Abdeckfunktion erfüllen. Weiterhin kann dadurch eine kostengünstige Herstellung des Funktionselementes begünstigt sein. Somit kann es sich bei dem Funktionselement vorzugsweise um ein Kunststoff-Spritzgussteil handeln.

Weiterhin kann bei einem erfindungsgemäßen Funktionselement vorteilhafterweise vorgesehen sein, dass die Brückeneinheit einen aktiven Transmitter, insbesondere zur Vergrößerung einer Reichweite des ersten und/oder zweiten Kommunikationsmittels, umfasst. Durch den aktiven Transmitter können die Kommunikationssignale insbesondere verstärkt werden. Beispielsweise kann es sich bei dem Transmitter um einen aktiven oder passiven Transponder handeln. Der aktive Transmitter kann insbesondere in das Funktionsmaterial eingebettet sein, um einen Schutz vor Umwelteinflüssen zu ermöglichen. Weiterhin kann der aktive Transmitter mit dem ersten und/oder zweiten Kommunikationsmittel in Verbindung stehen oder das erste und/oder zweite Kommunikationsmittel umfassen. Insbesondere kann der aktive Transmitter für eine Modulation von Signalen der drahtlosen Datenkommunikation ausgebildet sein, um z.B. digitale Daten zu übermitteln.

Weiterhin kann bei einem erfindungsgemäßen Funktionselement vorteilhafterweise vorgesehen sein, dass die Brückeneinheit einen Energiespeicher zur Energieversorgung des ersten und/oder zweiten Kommunikationsmittels und/oder des aktiven Transmitters umfasst, insbesondere wobei der Energiespeicher durch ein berührungsloses Ladeverfahren aufladbar ist. Bei dem Energiespeicher kann es sich insbesondere um eine Batterie oder Akkumulator oder einen Kondensator, insbesondere einen Superkondensator, handeln. Das berührungslose Ladeverfahren kann insbesondere ein induktives Laden des Energiespeichers umfassen. Beispielsweise ist es denkbar, dass Kommunikationssignale des Zubehörteils und/oder der Steuereinheit zum Energietransfer geeignet sind. Insbesondere kann der Energiespeicher durch Kommunikationssignale des Zubehörteils und/oder der Steuereinheit, vorzugsweise über das erste und/oder zweite Kommunikationsmittel, drahtlos aufladbar sein. Somit kann das Funktionselement beispielsweise zur aktiven Weiterleitung von Kommunikationssignalen des Zubehörteils ausgebildet sein, ohne dass elektrische Kontakte zum Aufladen bzw. zur Energiezufuhr notwendig sind.

Es ist ferner bei einem erfindungsgemäßen Funktionselement denkbar, dass die Brückeneinheit induktiv und/oder durch Datenkommunikationssignale von der Steuereinheit mit Energie versorgbar ist. Beispielsweise ist es denkbar, dass die Datenkommunikationssignale eine Information oder einen Befehl über oder an das Zubehörteil übermitteln können und gleichzeitig Energie zum Betrieb der Brückeneinheit transportieren. Dadurch kann ein Energiespeicher am Funktionselement kleiner ausgeführt sein oder entfallen.

Gemäß einem weiteren Aspekt der Erfindung ist ein Küchengerät, vorzugsweise in Form einer Küchenmaschine zum zumindest teilweise automatisierten Zubereiten von Speisen, vorgesehen. Das Küchengerät weist ein Zubehörteil für eine Zusatzfunktion des Küchengerätes und eine Steuereinheit mit einem Empfangsmodul für eine drahtlose Datenkommunikation mit dem Zubehörteil auf. Ferner weist das Küchengerät einen Schirmraum, in welchem das Zubehörteil von der Steuereinheit zumindest teilweise abschirmbar oder, insbesondere dauerhaft, abgeschirmt ist, und ein Funktionselement, insbesondere ein erfindungsgemäßes Funktionselement, auf. Das Funktionselement umfasst weiterhin einen Funktionsbereich für eine Funktion für das Küchengerät. Ferner ist vorgesehen, dass das Funktionselement eine Brückeneinheit zum Überwinden des Schirmraumes für eine drahtlose Datenkommunikation zwischen dem Zubehörteil und der Steuereinheit mit einem Zubehörabschnitt zur Kommunikation mit dem Zubehörteil, insbesondere im Schirmraum, und einem Steuerabschnitt zur Kommunikation mit der Steuereinheit aufweist.

Somit bringt ein erfindungsgemäßes Küchengerät die gleichen Vorteile mit sich, wie sie bereits ausführlich mit Bezug auf ein erfindungsgemäßes Funktionselement beschrieben worden sind. Vorzugsweise kann vorgesehen sein, dass die Steuereinheit in einem Sockelbereich des Küchengerätes angeordnet ist, insbesondere wobei ein Behälter des Küchengerätes auf dem Sockelbereich positionierbar ist. Dadurch kann eine sichere Unterbringung der Steuereinheit gewährleistet sein. Für die drahtlose Datenkommunikation kann das Zubehörteil einen Informationsträger, vorzugsweise mit einem Sende- und/oder Empfangsmodul, aufweisen. Beispielsweise kann der Informationsträger eine Kommunikationsschnittstelle, insbesondere eine RFID-Schnittstelle oder eine NFC-Schnittstelle umfassen. Die Steuereinheit kann vorzugsweise einen Prozessor, insbesondere einen Mikroprozessor, und/oder eine elektronische Schaltung umfassen. Die Steuereinheit kann mit einer Benutzerschnittstelle des Küchengerätes, insbesondere in Form einer Eingabeeinheit und/oder einer Anzeige, verbunden oder verbindbar sein. Dadurch kann ein Benutzer über das Zubehörteil, insbesondere über eine Präsenz des Zubehörteils, informierbar sein.

Weiterhin ist es bei einem erfindungsgemäßen Küchengerät denkbar, dass der Schirmraum durch einen Behälter mit einem Zubereitungsbereich zum Zubereiten von Speisen gebildet ist, insbesondere wobei ein Wandungsmaterial des Behälters ein Metall, bevorzugt einen Edelstahl, aufweist. Durch das Wandungsmaterial kann eine Barriere gebildet sein, die für die drahtlose Datenkommunikation undurchlässig ist oder die die drahtlose Datenkommunikation stört. Dadurch, dass es sich bei Edelstahl um ein korrosionsarmes Material handelt, kann ein Verschleiß und/oder eine Wartungsbedürftigkeit des Küchengerätes durch den Einsatz von Edelstahl reduziert sein. Insbesondere kann der Behälter intransparent ausgestaltet sein, so dass auch ein Benutzer nicht unmittelbar durch das Wandungsmaterial hindurchsehen und das Zubehörteil erkennen kann. Durch die Brückeneinheit kann das Zubehörteil dennoch erkennbar und dessen Präsenz des Zubehörteils einem Benutzer anzeigbar sein.

Weiterhin kann bei einem erfindungsgemäßen Küchengerät vorteilhafterweise vorgesehen sein, dass die Steuereinheit ein Erkennungsmodul zum Erkennen einer Präsenz und/oder einer Identifikation des Zubehörteils am Küchengerät aufweist. Vorzugsweise ist die Steuereinheit dazu ausgebildet, mehrere Zubehörteile durch die drahtlose Datenkommunikation zu erkennen und/oder zu identifizieren, d.h. insbesondere zu unterscheiden. Dadurch kann durch die Steuereinheit beurteilbar sein, ob ein Zubehörteil im Schirmraum vorhanden ist und/oder welches Zubehörteil im Schirmraum vorhanden ist. Beispielsweise kann über die drahtlose Datenkommunikation ein String zur Identifikation des Zubehörteils übermittelbar sein. Insbesondere im Zubereitungsbereich kann es von Interesse sein, Informationen über ein Vorhandensein eines Zubehörteils zu erhalten. Beispielsweise kann vorgesehen sein, dass im Zubereitungsbereich ein Zerkleinern möglich ist. In diesem Fall kann es von Interesse sein zu überprüfen, ob ein Messer zum Zerkleinern im Zubereitungsbereich vorhanden ist. Zusätzlich oder alternativ kann es von Interesse sein zu überprüfen, ob ein Benutzer weitere Zubehörteile im Zubereitungsbereich vergessen hat, so dass diese nicht in den Zerkleinerungsvorgang geraten. Dadurch kann eine Sicherheit des Küchengerätes verbessert sein.

Es ist ferner bei einem erfindungsgemäßen Küchengerät denkbar, dass das Zubehörteil eine Sensoreinheit zum Erkennen von Prozessparametern, insbesondere innerhalb des Schirmraums, aufweist, die durch die Brückeneinheit über die drahtlose Datenkommunikation an die Steuereinheit sendbar sind. Insbesondere können somit Informationen über einen Prozess im Schirmraum an die Steuereinheit übermittelbar sein. Vorzugsweise umfasst die Sensoreinheit einen Temperatursensor. Beispielsweise kann es sich bei den Prozessparametern um Garparametern von Nahrungsmitteln in einem Zubereitungsbereich handeln. Dadurch kann eine reproduzierbare Qualität des Prozesses des Küchengerätes, wie z.B. eines Kochvorgangs durch das Küchengerät, verbessert sein.

Gemäß einem weiteren Aspekt der Erfindung ist ein Verfahren zur Datenkommunikation zwischen einem Zubehörteil eines Küchengerätes, insbesondere eines erfindungsgemäßen Küchengerätes, und einer Steuereinheit des Küchengerätes vorgesehen. Die Schritte des Verfahrens erfolgen während das Zubehörteil in einem Schirmraum des Küchengerätes angeordnet ist, in welchem das Zubehörteil gegenüber der Steuereinheit abgeschirmt ist. Das Verfahren umfasst die folgenden Schritte:
- Empfangen von Kommunikationssignalen vom Zubehörteil durch ein Funktionselement, insbesondere durch ein erfindungsgemäßes Funktionselement, des Küchengerätes, das abschnittsweise zum Schirmraum und abschnittsweise zur Steuereinheit ausgerichtet ist, vorzugsweise durch ein erstes Kommunikationsmittel einer Brückeneinheit des Funktionselementes,
- Senden von Weiterleitungssignalen vom Funktionselement an die Steuereinheit in Abhängigkeit von den Kommunikationssignalen, vorzugsweise durch ein zweites Kommunikationsmittel der Brückeneinheit des Funktionselementes.

Somit bringt ein erfindungsgemäßes Verfahren die gleichen Vorteile mit sich, wie sie bereits ausführlich mit Bezug auf ein erfindungsgemäßes Funktionselement und/oder ein erfindungsgemäßes Küchengerät beschrieben worden sind. Insbesondere kann beim Empfangen der Kommunikationssignale eine Energieaufnahme durch das Funktionselement erfolgen, vorzugsweise wobei die Energieaufnahme zum Erzeugen der Weiterleitungssignale genutzt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Küchengerät mit einem erfindungsgemäßen Funktionselement,
- Figur 2: ein erfindungsgemäßes Verfahren in schematischer Darstellung von Verfahrensschritten,
- Figur 3: ein erfindungsgemäßes Küchengerät mit einem erfindungsgemäßen Funktionselement in einem zweiten Ausführungsbeispiel,
- Figur 4: das erfindungsgemäße Küchengerät des zweiten Ausführungsbeispiels mit unterschiedlichen Zubehörteilen.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

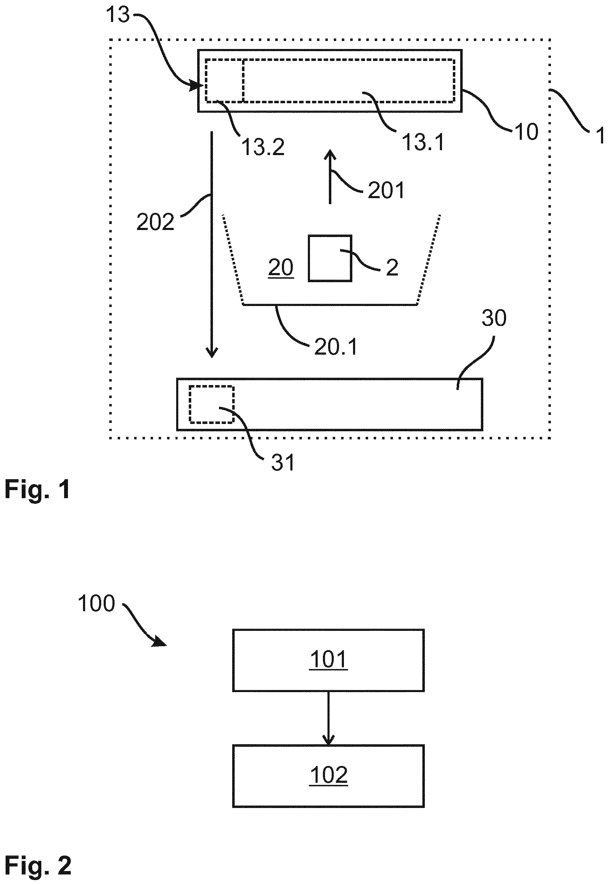

Figur 1 zeigt ein erfindungsgemäßes Küchengerät 1 mit einem erfindungsgemäßen Funktionselement 10 in schematischer Darstellung. Das Funktionselement 10 dient einer Funktion des Küchengerätes 1 und ist vorzugsweise beim Betrieb des Küchengerätes 1 dauerhaft am Küchengerät 1 montiert. Beispielsweise kann es sich bei dem Funktionselement 10 um eine sicherheitsrelevante Komponente des Küchengerätes 1 handeln. Das Küchengerät 1 weist ferner ein Zubehörteil 2 auf, welches eine Zusatzfunktion des Küchengerätes 1 ermöglicht. Vorzugsweise ist ein Betrieb des Küchengerätes 1 ohne Zubehörteil 2, insbesondere bei vermindertem oder alternativem Funktionsumfang, möglich. Weiterhin weist das Küchengerät 1 eine Steuereinheit 30 auf, die zur drahtlosen Datenkommunikation mit dem Zubehörteil 2 ausgebildet ist. Dazu weist die Steuereinheit 30 ein Empfangsmodul 31 für die drahtlose Datenkommunikation mit dem Zubehörteil 2 auf. Insbesondere kann vorgesehen sein, dass die Steuereinheit 30 dazu ausgebildet ist, einen Betrieb des Küchengerätes 1 ohne das Funktionselement 10 zu verhindern.

Das Zubehörteil 2 ist, insbesondere beim Betrieb des Küchengerätes 1, in einem Schirmraum 20 angeordnet, in welchem das Zubehörteil 2 von der Steuereinheit 30 durch einen Störabschnitt 20.1 einer Komponente des Küchengerätes 1 für eine direkte Datenkommunikation zumindest teilweise abgeschirmt ist. Der Störabschnitt 20.1 kann beispielsweise ein Metall aufweisen und dadurch Funksignale zur drahtlosen Datenkommunikation zwischen dem Zubehörteil 2 und der Steuereinheit 30 stören oder vollständig aufhalten. Um den Schirmraum 20 für die drahtlose Datenkommunikation zu überwinden, weist das Funktionselement 10 eine Brückeneinheit 13 auf. Die Brückeneinheit 13 umfasst einen Zubehörabschnitt 13.1 zur Kommunikation mit dem Zubehörteil 2 und einen Steuerabschnitt 13.2 zur Kommunikation mit der Steuereinheit 30. Vorzugsweise ist der Zubehörabschnitt 13.1 in Richtung des Schirmraums 20 ausgerichtet, in welchem sich das Zubehörteil 2 befindet. Der Steuerabschnitt 13.2 ist vorzugsweise in Richtung der Steuereinheit 30 ausgerichtet. Ferner können der Zubehörabschnitt 13.1 und der Steuerabschnitt 13.2 elektrisch verbunden sein oder in Datenkommunikationsverbindung miteinander bringbar sein.

Figur 2 zeigt Verfahrensschritte eines erfindungsgemäßen Verfahrens 100 zur Datenkommunikation zwischen dem Zubehörteil 2 und der Steuereinheit 30. Dabei umfasst das Verfahren 100 ein Empfangen 101 von Kommunikationssignalen 201 des Zubehörteils 2 durch das Funktionselement 10, insbesondere durch den Zubehörabschnitt 13.1. In Abhängigkeit von den Kommunikationssignalen 201 erfolgt dann ein Senden 102 von Weiterleitungssignalen 202 vom Funktionselement 10, vorzugsweise durch den Steuerabschnitt 13.2, an die Steuereinheit 30. Zum Senden 102 der Weiterleitungssignale 202 kann vorgesehen sein, dass die Kommunikationssignale 201 aufbereitet, d.h. beispielsweise ausgewertet, werden. Es kann jedoch ebenfalls vorgesehen sein, dass die Weiterleitungssignale 202 mit den Kommunikationssignalen 201 übereinstimmen und, insbesondere lediglich, in ihrer Richtung geändert und/oder verstärkt werden. Dadurch ist eine drahtlose Datenkommunikation zwischen dem Zubehörteil 2 und der Steuereinheit 30 über das Funktionselement 10 ermöglicht, obwohl sich das Zubehörteil 2 in dem Schirmraum 20 befindet.

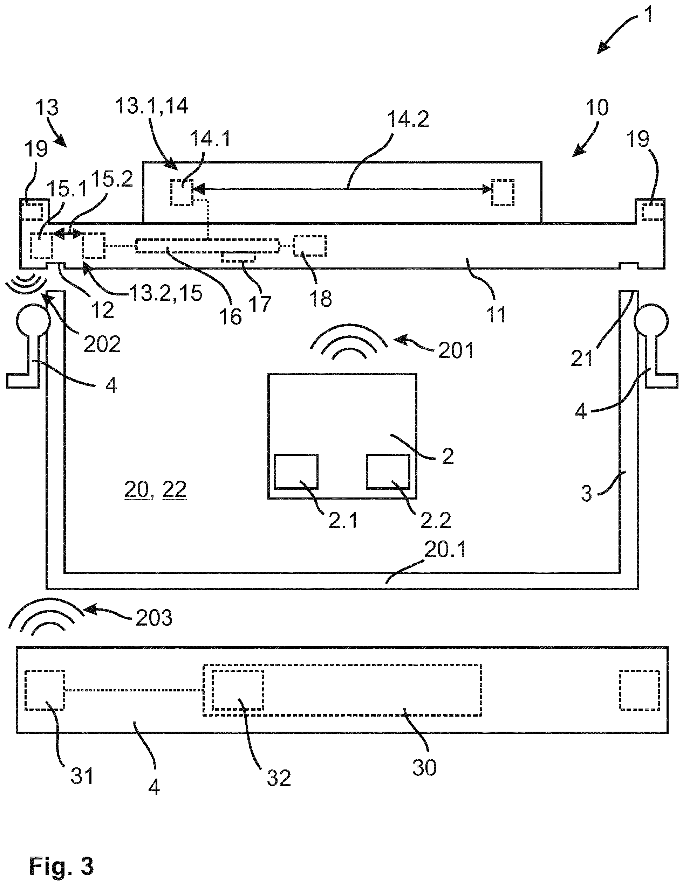

Figur 3 zeigt ein erfindungsgemäßes Küchengerät 1 mit einem erfindungsgemäßen Funktionselement 10 gemäß einem weiteren Ausführungsbeispiel in schematischer Darstellung. Insbesondere handelt es sich bei dem Küchengerät 1 um eine Küchenmaschine zur zumindest teilweise automatisierten Zubereitung von Speisen. Das Funktionselement 10 weist einen Funktionsbereich 11 auf, der für eine Abdeckfunktion eines Zubereitungsbereiches 22 des Küchengerätes 1 ausgebildet ist. Der Zubereitungsbereich 22 ist durch einen Behälter 3 des Küchengerätes 1 gebildet und weist, insbesondere umlaufend, eine mechanische Gegenschnittstelle 21 auf, an welcher eine mechanische Koppelschnittstelle 12 des Funktionselementes 10 anordbar ist, um das Funktionselement 10 am Behälter 3 zu positionieren. Dadurch kann im Betrieb des Küchengerätes 1 sichergestellt werden, dass das Funktionselement 10 in einer vorbestimmten Position positioniert ist. Vorzugsweise handelt es sich bei dem Funktionselement 10 um einen Deckel für den Behälter 3 des Küchengerätes 1. Es kann vorgesehen sein, dass das Funktionselement 10 zumindest eine Verschlussaufnahme 19 zur Aufnahme eines Verschlusselementes 4 aufweist, wodurch das Funktionselement 10 form- und/oder kraftschlüssig am Behälter 3 fixierbar ist.

Der Behälter 3 bildet ferner einen Schirmraum 20, durch welchen der Zubereitungsbereich 22 gegenüber einer Steuereinheit 30 des Küchengerätes 1 abgeschirmt ist. Innerhalb des Schirmraums 20 ist daher eine direkte drahtlose Datenkommunikation zwischen einem Zubehörteil 2, das für eine Zusatzfunktion des Küchengerätes 1 im Zubereitungsbereich 22 platzierbar ist, mit der Steuereinheit 30 verhindert oder gestört. Beispielsweise kann ein Störabschnitt 20.1 zum Abschirmen einer drahtlosen Datenkommunikation zwischen dem Zubehörteil 2 und der Steuereinheit 3 durch eine Behälterwandung des Behälters 3 gebildet sein, die einen Edelstahl aufweist. Die Steuereinheit 30 kann z.B. einen Prozessor oder Mikroprozessor umfassen, um Funktionen des Küchengerätes 1 anzusteuern.

Um eine drahtlose Datenkommunikation zwischen dem Zubehörteil 2 und der Steuereinheit 30 zu ermöglichen, weist das Funktionselement 10 eine Brückeneinheit 13 zum Überwinden des Schirmraumes 20 für die drahtlose Datenkommunikation auf. Die Brückeneinheit 13 weist einen Zubehörabschnitt 13.1 zur Kommunikation mit dem Zubehörteil 2 und einen Steuerabschnitt 13.2 zur Kommunikation mit der Steuereinheit 30 auf. Der Zubehörabschnitt 13.1 umfasst dabei ein erstes Kommunikationsmittel 14 zur drahtlosen Datenkommunikation mit dem Zubehörteil 2. Der Steuerabschnitt 13.2 umfasst ein zweites Kommunikationsmittel 15 zur drahtlosen Datenkommunikation mit der Steuereinheit 30. Das erste Kommunikationsmittel 14 umfasst eine NFC-Schnittstelle, durch welche ein Kommunikationsmodul 2.1, insbesondere in Form einer NFC-Schnittstelle, des Zubehörteils 2 im Schirmraum 20 über eine Datenkommunikation ansprechbar ist. Insbesondere kann das Kommunikationsmodul 2.1 des Zubehörteils 2 passiv ausgebildet sein und durch Signale des ersten Kommunikationsmittels 14 mit Energie versorgbar sein. Das zweite Kommunikationsmittel 15 umfasst vorzugsweise eine NFC-Schnittstelle oder eine Bluetooth-Schnittstelle, insbesondere in Form einer Bluetooth-Low-Energy-Schnittstelle (BLE-Schnittstelle). Dadurch kann eine vorteilhafte drahtlose Datenkommunikation mit der Steuereinheit 30 ermöglicht sein. Eine NFC-Schnittstelle des zweiten Kommunikationsmittels 15 hat beispielsweise den Vorteil, dass der gleiche oder ein ähnlicher Kommunikationsstandard verwendet werden kann, wie durch das erste Kommunikationsmittel 14. Eine BLE-Schnittstelle des zweiten Kommunikationsmittels 15 hat beispielsweise den Vorteil, dass eine Übersendung komplexerer, insbesondere aufbereiteter, Daten und/oder eine verbesserte Reichweite ermöglicht sein kann. Es kann vorgesehen sein, dass das erste und zweite Kommunikationsmittel 14, 15 jeweils eine Spulenantenne 14.1, 15.1 aufweisen. Dabei kann vorgesehen sein, dass ein Wicklungsdurchmesser 14.2 einer Wicklung der Spulenantenne 14.1 des ersten Kommunikationsmittels 14 größer ist, als ein Wicklungsdurchmesser 15.2 einer Wicklung der Spulenantenne 15.1 des zweiten Kommunikationsmittels 15. Dadurch kann durch die Brückeneinheit 13 eine möglichst breite Erreichbarkeit des Zubehörteils 2 im Schirmraum 20 und vorzugsweise auch außerhalb des Schirmraums 20 und eine präzise und damit sichere und/oder energiearme Kommunikation mit der Steuereinheit 30 ermöglicht sein. Das erste und zweite Kommunikationsmittel 14, 15 können vorteilhafterweise vollständig in ein Funktionsmaterial des Funktionsbereiches 11 eingebettet sein.

Insbesondere zur Vergrößerung der Reichweite des ersten und/oder zweiten Kommunikationsmittels 14, 15 kann die Brückeneinheit 13 einen aktiven Transmitter 17 aufweisen. Weiterhin kann die Brückeneinheit 13 einen Energiespeicher 18 zur Energieversorgung des ersten und/oder zweiten Kommunikationsmittels 14, 15 und/oder des aktiven Transmitters 17 aufweisen. Der Energiespeicher 18 kann z.B. eine Batterie, einen Akkumulator und/oder einen Superkondensator umfassen. Vorzugsweise kann das erste und/oder zweite Kommunikationsmittel 14, 15 dazu ausgebildet sein, den Energiespeicher 18 durch Kommunikationssignale 201 des Zubehörteils 2 und/oder durch Datenkommunikationssignale 203 der Steuereinheit 30 berührungslos zu laden. Vorzugsweise umfasst die Brückeneinheit 13 eine Leiterplatte 16 mit einer Elektronik zur Signal- und/oder Datenverarbeitung. Durch die Leiterplatte 16 mit der Elektronik kann z.B. eine Vorauswertung der Kommunikationssignale 201 des Zubehörteils 2 ermöglicht sein, in Abhängigkeit derer Weiterleitungssignale 202 an die Steuereinheit 30 gesendet werden.

Durch die drahtlose Datenkommunikation zwischen der Steuereinheit 30 und dem Zubehörteil 2 über das Funktionselement 10 kann eine Präsenz des Zubehörteils 2 im Schirmraum 20 und/oder eine Identifikation des Zubehörteils 2 erfolgen. Dazu kann die Steuereinheit 30 ein Erkennungsmodul 32 zum Erkennen der Präsenz und/oder der Identifikation des Zubehörteils 2 aufweisen.

Weiterhin kann vorgesehen sein, dass das Zubehörteil 2 eine Sensoreinheit 2.2 zum Erkennen von Prozessparametern innerhalb des Schirmraums 20, insbesondere innerhalb des Zubereitungsraums 22, aufweist. Die Prozessparameter können über die Brückeneinheit 13 an die Steuereinheit 30 sendbar sein und durch die Steuereinheit 30 verarbeitbar sein. Beispielsweise kann durch die Steuereinheit 30 eine Rezeptsteuerung des Küchengerätes 1 in Abhängigkeit von den Prozessparametern erfolgen.

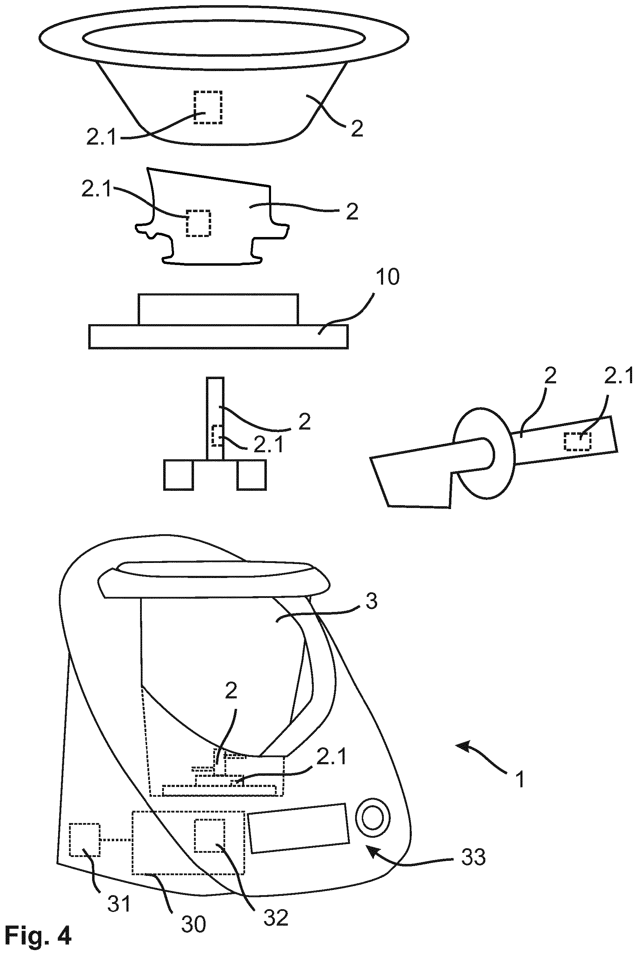

Figur 4 zeigt das Küchengerät 1 in Form einer Küchenmaschine mit unterschiedlichen Zubehörteilen 2, die jeweils ein Kommunikationsmodul 2.1 zur drahtlosen Datenkommunikation zwischen dem jeweiligen Zubehörteil 2 und der Steuereinheit 30 des Küchengerätes 1 zu ermöglichen. So ist z.B. ein Zubehörteil 2 in Form eines Spatels gezeigt. Durch das Funktionselement 10 kann überprüft werden, ob ein Benutzer den Spatel im Behälter 3 des Küchengerätes 1 vergessen hat und ob ein weiteres Zubehörteil 2 in Form eines Messers im Behälter 3 vorhanden ist, bevor ein Zerkleinerungsvorgang über eine Benutzerschnittstelle 33 des Küchengerätes 1, die mit der Steuereinheit 30 verbunden ist, gestartet werden kann. Ferner sind Zubehörteile 2 in Form eines Dampfgaraufsatzes, eines Rührbesens und eines Spritzschutzes eines Deckelelementes vorgesehen, um unterschiedliche Zusatzfunktionen des Küchengerätes 1 zu ermöglichen. Vorzugsweise ist die Steuereinheit 30 dazu ausgebildet, mehrere Zubehörteile 2 durch die drahtlose Datenkommunikation zu erkennen und/oder zu identifizieren, d.h. insbesondere zu unterscheiden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung, wie sie in den vorliegenden Ansprüche definiert wurde, zu verlassen.

### Bezugszeichenliste

- 1: Küchengerät
- 2: Zubehörteil
- 2.1: Kommunikationsmodul
- 2.2: Sensoreinheit
- 3: Behälter
- 4: Verschlusselement

- 10: Funktionselement
- 11: Funktionsbereich
- 12: Koppelschnittstelle
- 13: Brückeneinheit
- 13.1: Zubehörabschnitt
- 13.2: Steuerabschnitt
- 14: erstes Kommunikationsmittel
- 14.1: Spulenantenne
- 14.2: Wicklungsdurchmesser von 14.1
- 15: zweites Kommunikationsmittel
- 15.1: Spulenantenne
- 15.2: Wicklungsdurchmesser von 15.1
- 16: Leiterplatte
- 17: Transmitter
- 18: Energiespeicher
- 19: Verschlussaufnahme

- 20: Schirmraum
- 20.1: Störabschnitt
- 21: Gegenschnittstelle
- 22: Zubereitungsbereich

- 30: Steuereinheit
- 31: Empfangsmodul
- 32: Erkennungsmodul
- 33: Benutzerschnittstelle

- 100: Verfahren
- 101: Empfangen
- 102: Senden

- 201: Kommunikationssignalen
- 202: Weiterleitungssignalen
- 203: Datenkommunikationssignale

## Patentansprüche

1. Funktionselement (10) für ein Küchengerät (1) aufweisend
einen Funktionsbereich (11) für eine Funktion für das Küchengerät (1), **gekennzeichnet durch** eine Brückeneinheit (13) zum Überwinden eines ein Zubehörteil (2) des Küchengerätes (1) von einer Steuereinheit (30) des Küchengerätes (1) zumindest teilweise abschirmenden Schirmraumes (20) des Küchengerätes (1) für eine drahtlose Datenkommunikation zwischen dem Zubehörteil (2) und der Steuereinheit (30) mit einem Zubehörabschnitt (13.1) zur Kommunikation mit dem Zubehörteil (2) und einem Steuerabschnitt (13.2) zur Kommunikation mit der Steuereinheit (30).

2. Funktionselement (10) nach Anspruch 1,
**dadurch gekennzeichnet,**
**dass** der Zubehörabschnitt (13.1) ein erstes Kommunikationsmittel (14) zur drahtlosen Datenkommunikation mit dem Zubehörteil (2) und der Steuerabschnitt (13.2) ein zweites Kommunikationsmittel (15) zur drahtlosen Datenkommunikation mit der Steuereinheit (30) aufweist.

3. Funktionselement (10) nach Anspruch 1 oder 2,
**dadurch gekennzeichnet,**
**dass** das erste und/oder zweite Kommunikationsmittel (14, 15) eine Spulenantenne (14.1, 15.1) aufweist, insbesondere wobei eine Wicklung der Spulenantenne (14.1) des ersten Kommunikationsmittels (14) einen größeren Wicklungsdurchmesser (14.2) aufweist, als eine Wicklung der Spulenantenne (15.1) des zweiten Kommunikationsmittels (15).

4. Funktionselement (10) nach einem der vorhergehenden Ansprüche,
**dadurch gekennzeichnet,**
**dass** das erste und/oder zweite Kommunikationsmittel (14, 15) eine NFC-Schnittstelle und/oder eine Bluetooth-Schnittstelle, insbesondere eine Bluetooth-Low-Energy-Schnittstelle umfasst.

5. Funktionselement (10) nach einem der vorhergehenden Ansprüche,
**dadurch gekennzeichnet,**
**dass** eine mechanische Koppelschnittstelle (12) zur Anordnung an einer mechanischen Gegenschnittstelle (21) des Küchengerätes (1) vorgesehen ist, wobei die Koppelschnittstelle (12) derart angeordnet ist, dass bei der Anordnung der Koppelschnittstelle (12) an der Gegenschnittstelle (21) zumindest der Steuerabschnitt (13.2) außerhalb des Schirmraumes (20) positionierbar ist.

6. Funktionselement (10) nach einem der vorhergehenden Ansprüche,
**dadurch gekennzeichnet,**
**dass** der Funktionsbereich (11) für eine Abdeckfunktion eines Zubereitungsbereiches (22) zum Zubereiten von Speisen des Küchengerätes (1) ausgebildet ist, insbesondere wobei zumindest eine Verschlussaufnahme (19) vorgesehen ist, durch welche das Funktionselement (10) an der mechanischen Gegenschnittstelle (21) fixierbar ist.

7. Funktionselement (10) nach einem der vorhergehenden Ansprüche,
**dadurch gekennzeichnet,**
**dass** der Funktionsbereich (11) ein Funktionsmaterial aufweist, in welches die Brückeneinheit (13), insbesondere vollständig, eingebettet ist.

8. Funktionselement (10) nach einem der vorhergehenden Ansprüche,
**dadurch gekennzeichnet,**
**dass** die Brückeneinheit (13) einen aktiven Transmitter (17), insbesondere zur Vergrößerung einer Reichweite des ersten und/oder zweiten Kommunikationsmittels (14, 15), umfasst.

9. Funktionselement (10) nach einem der vorhergehenden Ansprüche,
**dadurch gekennzeichnet,**
**dass** die Brückeneinheit (13) einen Energiespeicher (18) zur Energieversorgung des ersten und/oder zweiten Kommunikationsmittels (14, 15) und/oder des aktiven Transmitters (17) umfasst, insbesondere wobei der Energiespeicher (18) durch ein berührungsloses Ladeverfahren aufladbar ist.

10. Funktionselement (10) nach einem der vorhergehenden Ansprüche,
**dadurch gekennzeichnet,**
**dass** die Brückeneinheit (13) induktiv und/oder durch Datenkommunikationssignale (203) von der Steuereinheit (30) mit Energie versorgbar ist.

11. Küchengerät (1) aufweisend
ein Zubehörteil (2) für eine Zusatzfunktion des Küchengerätes (1),
eine Steuereinheit (30) mit einem Empfangsmodul (31) für eine drahtlose Datenkommunikation mit dem Zubehörteil (2),
einen Schirmraum (20), in welchem das Zubehörteil (2) von der Steuereinheit (30) zumindest teilweise abschirmbar ist, und
ein Funktionselement (10), insbesondere nach einem der vorhergehenden Ansprüche, mit einem Funktionsbereich (11) für eine Funktion für das Küchengerät (1),
**dadurch gekennzeichnet,**
**dass** das Funktionselement (10) eine Brückeneinheit (13) zum Überwinden des Schirmraumes (20) für eine drahtlose Datenkommunikation zwischen dem Zubehörteil (2) und der Steuereinheit (30) mit einem Zubehörabschnitt (13.1) zur Kommunikation mit dem Zubehörteil (2) und einem Steuerabschnitt (13.2) zur Kommunikation mit der Steuereinheit (30) aufweist.

12. Küchengerät (1) nach Anspruch 11,
**dadurch gekennzeichnet,**
**dass** der Schirmraum (20) durch einen Behälter (3) mit einem Zubereitungsbereich (22) zum Zubereiten von Speisen gebildet ist, insbesondere wobei ein Wandungsmaterial des Behälters (3) ein Metall, bevorzugt einen Edelstahl, aufweist.

13. Küchengerät (1) nach einem der Ansprüche 11 oder 12,
**dadurch gekennzeichnet,**
**dass** die Steuereinheit (30) ein Erkennungsmodul (32) zum Erkennen einer Präsenz und/oder einer Identifikation des Zubehörteils (2) am Küchengerät (1) aufweist.

14. Küchengerät (1) nach einem der vorhergehenden Ansprüche,
**dadurch gekennzeichnet,**
**dass** das Zubehörteil (2) eine Sensoreinheit (2.2) zum Erkennen von Prozessparametern, insbesondere innerhalb des Schirmraums (20), aufweist, die durch die Brückeneinheit (13) über die drahtlose Datenkommunikation an die Steuereinheit (30) sendbar sind.

15. Verfahren (100) zur Datenkommunikation zwischen einem Zubehörteil (2) eines Küchengerätes (1), insbesondere nach einem der Ansprüche 11 bis 14, und einer Steuereinheit (30) des Küchengerätes (1), während das Zubehörteil (2) in einem Schirmraum (20) des Küchengerätes (1) angeordnet ist, in welchem das Zubehörteil (2) gegenüber der Steuereinheit (30) abgeschirmt ist, umfassend die folgenden Schritte:
- Empfangen (101) von Kommunikationssignalen (201) vom Zubehörteil (2) durch ein Funktionselement (10), insbesondere nach einem der Ansprüche 1 bis 10, des Küchengerätes (1), das abschnittsweise zum Schirmraum (20) und abschnittsweise zur Steuereinheit (30) ausgerichtet ist,
- Senden (102) von Weiterleitungssignalen (202) vom Funktionselement (10) an die Steuereinheit (30) in Abhängigkeit von den Kommunikationssignalen (201).

## Claims

1. Functional element (10) for a kitchen appliance (1) comprising
a functional area (11) for a function for the kitchen appliance (1), **characterized by** a bridge unit (13) for bridging a shielding space (20) of the kitchen appliance (1) at least partially shielding an accessory (2) of the kitchen appliance (1) from a control unit (30) of the kitchen appliance (1) for wireless data communication between the accessory (2) and the control unit (30) with an accessory section (13.1) for communication with the accessory (2) and a control section (13.2) for communication with the control unit (30).

2. Functional element (10) according to claim 1,
**characterized in that**
the accessory section (13.1) comprises a first communication means (14) for wireless data communication with the accessory (2) and the control section (13.2) comprises a second communication means (15) for wireless data communication with the control unit (30).

3. Functional element (10) according to claim 1 or 2,
**characterized in that**
the first and/or second communication means (14, 15) has a coil antenna (14.1, 15.1), in particular a winding of the coil antenna (14.1) of the first communication means (14) having a larger winding diameter (14.2) than a winding of the coil antenna (15.1) of the second communication means (15).

4. Functional element (10) according to any one of the preceding claims,
**characterized in that**
the first and/or second communication means (14, 15) comprises an NFC interface and/or a Bluetooth interface, in particular a Bluetooth low-energy interface.

5. Functional element (10) according to any one of the preceding claims,
**characterized in that**
a mechanical coupling interface (12) is provided for arrangement on a mechanical counter interface (21) of the kitchen appliance (1), the coupling interface (12) being arranged in such a way that, when the coupling interface (12) is arranged on the counter interface (21), at least the control section (13.2) can be positioned outside the shielding space (20).

6. Functional element (10) according to any one of the preceding claims,
**characterized in that**
the functional region (11) is designed for a covering function of a preparation region (22) for preparing food of the kitchen appliance (1), in particular at least one closure receptacle (19) being provided, by means of which the functional element (10) can be fixed to the mechanical counter interface (21).

7. Functional element (10) according to any one of the preceding claims,
**characterized in that**
the functional region (11) has a functional material in which the bridge unit (13) is embedded, in particular completely.

8. Functional element (10) according to any one of the preceding claims,
**characterized in that**
the bridge unit (13) comprises an active transmitter (17), in particular for increasing a range of the first and/or second communication means (14, 15).

9. Functional element (10) according to any one of the preceding claims,
**characterized in that**
the bridge unit (13) comprises an energy store (18) for supplying energy to the first and/or second communication means (14, 15) and/or the active transmitter (17), in particular it being possible for the energy store (18) to be charged by a contactless charging method.

10. Functional element (10) according to any one of the preceding claims,
**characterized in that**
the bridge unit (13) can be supplied with power inductively and/or by data communication signals (203) from the control unit (30).

11. Kitchen appliance (1) comprising
an accessory (2) for an additional function of the kitchen appliance (1),
a control unit (30) with a receiver module (31) for wireless data communication with the accessory (2),
a shielding space (20) in which the accessory (2) can be at least partially shielded from the control unit (30), and
a functional element (10), in particular according to any one of the preceding claims, comprising a functional area (11) for a function for the kitchen appliance (1),
**characterized in that**
the functional element (10) has a bridge unit (13) for bridging the shielding space (20) for wireless data communication between the accessory (2) and the control unit (30), having an accessory section (13.1) for communication with the accessory (2) and a control section (13.2) for communication with the control unit (30).

12. Kitchen appliance (1) according to claim 11,
**characterized in that**
the shielding space (20) is formed by a container (3) with a preparation area (22) for preparing food, in particular wherein a wall material of the container (3) comprises a metal, preferably a stainless steel.

13. Kitchen appliance (1) according to any one of claims 11 or 12,
**characterized in that**
the control unit (30) comprises a detection module (32) for detecting a presence and/or an identification of the accessory (2) on the kitchen appliance (1).

14. Kitchen appliance (1) according to any one of the preceding claims,
**characterized in that**
the accessory (2) has a sensor unit (2.2) for detecting process parameters, in particular within the shielding space (20), which can be transmitted to the control unit (30) by the bridge unit (13) via the wireless data communication.

15. Method (100) fordata communication between an accessory (2) of a kitchen appliance (1), in particular according to one of claims 11 to 14, and a control unit (30) of the kitchen appliance (1), while the accessory (2) is arranged in a shielding space (20) of the kitchen appliance (1), in which the accessory (2) is shielded from the control unit (30), comprising the following steps:
- receiving (101) communication signals (201) from the accessory (2) by a functional element (10), in particular according to one of claims 1 to 10, of the kitchen appliance (1), which is aligned in sections with the shielding space (20) and in sections with the control unit (30),
- sending (102) forwarding signals (202) from the functional element (10) to the control unit (30) in response to the communication signals (201).

## Revendications

1. Elément fonctionnel (10) pour un appareil de cuisine (1) comprenant
une zone fonctionnelle (11) pour une fonction pour l'appareil de cuisine (1), **caractérisée par** une unité de pont (13) pour surmonter un espace de blindage (20) de l'appareil de cuisine (1) protégeant au moins partiellement un accessoire (2) de l'appareil de cuisine (1) d'une unité de commande (30) de l'appareil de cuisine (1) pour une communication de données sans fil entre l'accessoire (2) et l'unité de commande (30) avec une section d'accessoire (13.1) pour la communication avec l'accessoire (2) et une section de commande (13.2) pour la communication avec l'unité de commande (30).

2. Elément fonctionnel (10) selon la revendication 1,
**caractérisé en ce que**
la section d'accessoire (13.1) présente un premier moyen de communication (14) pour la communication de données sans fil avec l'accessoire (2) et la section de commande (13.2) présente un deuxième moyen de communication (15) pour la communication de données sans fil avec l'unité de commande (30).

3. Elément fonctionnel (10) selon la revendication 1 ou 2,
**caractérisé en ce que**
le premier et/ou le deuxième moyen de communication (14, 15) présente une antenne à bobine (14.1, 15.1), en particulier où un enroulement de l'antenne à bobine (14.1) du premier moyen de communication (14) présente un diamètre d'enroulement (14.2) plus grand qu'un enroulement de l'antenne à bobine (15.1) du deuxième moyen de communication (15).

4. Élément fonctionnel (10) selon l'une des revendications précédentes,
**caractérisé en ce que**
le premier et/ou le deuxième moyen de communication (14, 15) comprend une interface NFC et/ou une interface Bluetooth, en particulier une interface Bluetooth à faible consommation d'énergie.

5. Élément fonctionnel (10) selon l'une des revendications précédentes,
**caractérisé en ce qu'**
une interface de couplage mécanique (12) est prévue pour être disposée sur une contre-interface mécanique (21) de l'appareil de cuisine (1), l'interface de couplage (12) étant disposée de telle sorte que, lorsque l'interface de couplage (12) est disposée sur la contre-interface (21), au moins la section de commande (13.2) peut être positionnée à l'extérieur de l'espace de blindage (20).

6. Élément fonctionnel (10) selon l'une des revendications précédentes,
**caractérisé en ce que**
la zone fonctionnelle (11) est conçue pour une fonction de recouvrement d'une zone de préparation (22) pour la préparation d'aliments de l'appareil de cuisine (1), au moins un logement de fermeture (19) étant notamment prévu, par lequel l'élément fonctionnel (10) peut être fixé sur la contre-interface mécanique (21).

7. Élément fonctionnel (10) selon l'une des revendications précédentes,
**caractérisé en ce que**
la zone fonctionnelle (11) présente un matériau fonctionnel dans lequel l'unité de pont (13) est encastrée, en particulier complètement.

8. Élément fonctionnel (10) selon l'une des revendications précédentes,
**caractérisé en ce que**
l'unité de pont (13) comprend un transmetteur actif (17), en particulier pour augmenter une portée du premier et/ou du deuxième moyen de communication (14, 15).

9. Élément fonctionnel (10) selon l'une des revendications précédentes,
**caractérisé en ce que**
l'unité de pont (13) comprend un accumulateur d'énergie (18) pour l'alimentation en énergie du premier et/ou du deuxième moyen de communication (14, 15) et/ou du transmetteur actif (17), en particulier l'accumulateur d'énergie (18) pouvant être chargé par un procédé de charge sans contact.

10. Élément fonctionnel (10) selon l'une des revendications précédentes,
**caractérisé en ce que**
l'unité de pont (13) peut être alimentée en énergie par induction et/ou par des signaux de communication de données (203) provenant de l'unité de commande (30).

11. Appareil de cuisine (1) comprenant
un accessoire (2) pour une fonction supplémentaire de l'appareil de cuisine (1),
une unité de commande (30) avec un module de réception (31) pour une communication de données sans fil avec l'accessoire (2),
un espace de blindage (20) dans lequel l'accessoire (2) peut être au moins partiellement protégé de l'unité de commande (30), et
un élément fonctionnel (10), en particulier selon l'une des revendications précédentes, avec une zone fonctionnelle (11) pour une fonction pour l'appareil de cuisine (1),
**caractérisé en ce que**
l'élément fonctionnel (10) présente une unité de pont (13) pour surmonter l'espace de blindage (20) pour une communication de données sans fil entre l'accessoire (2) et l'unité de commande (30) avec une section d'accessoire (13.1) pour la communication avec l'accessoire (2) et une section de commande (13.2) pour la communication avec l'unité de commande (30).

12. Appareil de cuisine (1) selon la revendication 11,
**caractérisé en ce que**
l'espace de blindage (20) est formé par un récipient (3) avec une zone de préparation (22) pour la préparation d'aliments, en particulier dans lequel un matériau de paroi du récipient (3) présente un métal, de préférence un acier inoxydable.

13. Appareil de cuisine (1) selon l'une des revendications 11 ou 12,
**caractérisé en ce que**
l'unité de commande (30) présente un module de détection (32) pour détecter une présence et/ou une identification de l'accessoire (2) sur l'appareil de cuisine (1).

14. Appareil de cuisine (1) selon l'une quelconque des revendications précédentes,
**caractérisé en ce que**
l'accessoire (2) présente une unité de capteur (2.2) pour détecter des paramètres de processus, en particulier à l'intérieur de l'espace de blindage (20), qui peuvent être envoyés par l'unité de pont (13) à l'unité de commande (30) par l'intermédiaire de la communication de données sans fil.

15. Procédé (100) pourcommunication de données entre un accessoire (2) d'un appareil de cuisine (1), en particulier selon l'une des revendications 11 à 14, et une unité de commande (30) de l'appareil de cuisine (1), tandis que l'accessoire (2) est disposé dans un espace de blindage (20) de l'appareil de cuisine (1), dans lequel l'accessoire (2) est blindé par rapport à l'unité de commande (30), comprenant les étapes suivantes :
- réception (101) de signaux de communication (201) provenant de l'accessoire (2) par un élément fonctionnel (10), notamment selon l'une des revendications 1 à 10, de l'appareil de cuisine (1), qui est orienté par tronçons vers l'espace de blindage (20) et par tronçons vers l'unité de commande (30),
- l'envoi (102) de signaux de retransmission (202) de l'élément fonctionnel (10) à l'unité de commande (30) en fonction des signaux de communication (201).
